# EUROPEAN PATENT APPLICATION

(11) **EP 4 697 468 A1**
(43) Date of publication of application: **18.02.2026**
(21) Application number: 25193517.7
(22) Date of filing: 01.08.2025
(51) Int. Cl.: H01M 50/204, H01M 50/271, H01M 50/284, H01M 50/291, H01M 50/342, H01M 50/35, H01M 50/507, H01M 50/30, H01M 50/569

(54) **BATTERY MODULE**

(30) Priority: 13.08.2024 KR 20240108311
(71) Applicant: SAMSUNG SDI CO., LTD., Yongin-si, Gyeonggi-do 17084 (KR)
(72) Inventor: LEE, JUNYOUNG, 17084 Yongin-Si (KR); KIM, JUNGHEON, 17084 Yongin-Si (KR)
(74) Representative: Regimbeau

(57) **Abstract**

A battery module (100) includes a plurality of battery cells (10), each of the plurality of battery cells including a vent (13), busbars (120) electrically connecting the plurality of battery cells, a holder (110) on the plurality of battery cells and accommodating the busbars, the holder including holes (113) and protrusions (118), and each of the holes overlapping a corresponding vent, and a cover portion (130) on the holder and covering the busbars, the cover portion including a cover (132) covering upper surfaces of the busbars, the protrusions (118) of the holder protruding toward the cover, and wall portions (138) protruding from edges of the cover toward the busbars.

## Description

### BACKGROUND

### 1. Field

The present disclosure relates to a battery module.

### 2. Description of the Related Art

Unlike primary batteries that cannot be recharged, secondary batteries are batteries that can be (re)charged and discharged. Low-capacity battery cells may be used in small portable electronic devices such as smartphones, feature phones, laptop computers, digital cameras, and camcorders, and high-capacity battery cells may be used as driving power sources and power storage batteries for motors in hybrid vehicles, electric vehicles, and the like. Such a battery cell may include an electrode assembly including a positive electrode and a negative electrode, a case for accommodating the same, and an electrode terminal connected to the electrode assembly.

Meanwhile, high-capacity battery cells may be used as battery modules in which a plurality of battery cells are connected to each other in series and/or parallel to provide high-energy density (for example, for driving motors for hybrid vehicles).

### SUMMARY

An embodiment of the present disclosure provides a battery module including a plurality of battery cells each including a vent, busbars configured to electrically connect the plurality of battery cells, a holder positioned on the plurality of battery cells to accommodate the busbars, and a cover portion positioned on the holder to cover the busbars, wherein the cover portion includes a cover configured to cover upper surfaces of the busbars and wall portions protruding from edges of the cover toward the busbars, and the holder includes protrusions protruding toward the cover and holes overlapping the vents.

In the present embodiment, an upper surface of the busbar may be spaced apart from the cover.

In the present embodiment, a separation distance between the upper surface of the busbar and a lower surface of the cover may be in a range of 0.1 mm to 5 mm.

In the present embodiment, the battery module may further include an air layer between the busbars and the cover portion.

In the present embodiment, a thickness of the cover portion may be in a range of 0.6 mm to 3 mm.

In the present embodiment, the cover portion may be coupled to the holder, and a plurality of openings through which wires pass may be defined by the wall portions and the protrusions.

In the present embodiment, each of the plurality of openings may be defined between the wall portion and the wall portion, between the wall portion and the protrusion, or between the protrusion and the protrusion.

In the present embodiment, the wires may be respectively connected to the busbars, and one wire of the wires may pass through one opening of the plurality of openings.

In the present embodiment, the plurality of openings may overlap the busbars, respectively.

In the present embodiment, the cover portion may include a plurality of cover portions spaced apart from each other, and the holes may be exposed between the plurality of cover portions.

Another embodiment of the present disclosure provides a battery module including a plurality of battery cells, busbars configured to electrically connect the plurality of battery cells, a holder positioned on the plurality of battery cells to accommodate the busbars, and a cover portion positioned on the holder and coupled to the holder to cover the busbars, wherein the cover portion includes a cover configured to cover upper surfaces of the busbars and wall portions protruding from edges of the cover toward the busbars, and the holder includes protrusions which protrude toward the cover and define a plurality of openings in combination with the wall portions.

In the present embodiment, the plurality of openings may overlap the busbars, respectively.

In the present embodiment, each of the plurality of openings may be defined between the wall portion and the wall portion, between the wall portion and the protrusion, or between the protrusion and the protrusion.

In the present embodiment, the battery module may further include wires of which one end portions are connected to the busbars, respectively, wherein the other end portions of the wires are connected to a sensing unit positioned on the holder, and one wire of the wires passes through one opening of the plurality of openings.

In the present embodiment, an upper surface of the busbar may be spaced apart from the cover.

### BRIEF DESCRIPTION OF THE DRAWINGS

Features will become apparent to those of skill in the art by describing in detail exemplary embodiments with reference to the attached drawings, in which:
FIG. 1 is a schematic exploded perspective view illustrating an example of a battery module according to an embodiment of the present disclosure;
FIG. 2 is a schematic perspective view illustrating an example of a holder and busbars of the battery module of FIG. 1;
FIG. 3 is a schematic perspective view illustrating an example of a battery cell of the battery module of FIG. 1;
FIG. 4 is a schematic cross-sectional view illustrating an example of a cross section along line III-III' of FIG. 3;
FIG. 5 is a schematic perspective view illustrating an example of a state in which the holder, the busbar, and a cover portion of the battery module of FIG. 1 are coupled to each other;
FIG. 6 is a schematic perspective view illustrating an example of part A of FIG. 5; and
FIG. 7 is a schematic perspective view illustrating an example of part B of FIG. 5.

### DETAILED DESCRIPTION

Reference will now be made in detail to embodiments, examples of which are illustrated in the accompanying drawings. In the drawing figures, the dimensions of layers and regions may be exaggerated for clarity of illustration, and like reference numerals refer to like elements throughout. In this regard, the present embodiments may have different forms and should not be construed as being limited to the descriptions set forth herein. Accordingly, the embodiments are merely described below, by referring to the figures to explain aspects.

As used herein, the term "and/or" includes any and all combinations of one or more of the associated listed items. Expressions such as "at least one of," when preceding a list of elements, modify the entire list of elements and do not modify the individual elements of the list.

Hereinafter, exemplary embodiments of the present disclosure will be described with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best description. Accordingly, embodiments disclosed in the present specification and configurations illustrated in the drawings are merely most exemplary embodiments of the present disclosure and do not represent all of the technical ideas of the present disclosure, and thus it should be understood that there may be various equivalents and modifications that can substitute these at the time of filing of the present application.

Further, "comprise" and "include" and/or "comprising" and "including" used in this specification should be interpreted as specifying the presence of described shapes, numbers, steps, operations, members, elements, and/or groups thereof and do not exclude the presence or addition of other shapes, numbers, operations, members, elements, and/or groups thereof.

It will be understood that, although the terms first, second, and the like are used herein to describe various elements, these elements should not be limited by these terms. These terms are only used to distinguish one element from another element, and a first element may also be a second element unless particularly described otherwise.

Through the specification, each element may be singular or plural unless particularly described otherwise.

When it is said that an arbitrary element is disposed on "an upper portion (or a lower portion)" of an element or disposed "above (or below)" an element, this may not only mean that the arbitrary element is disposed in contact with an upper surface (or a lower surface) of the element, but also mean that another element may be interposed between the element and the arbitrary element disposed above (or below) the element.

It will also be understood that when a layer or element is referred to as being "on" another layer, element, or substrate, it can be directly on the other layer, element, or substrate, or intervening layers may also be present. Further, it will also be understood that when a layer is referred to as being "between" two layers or elements, it can be the only layer or element between the two layers or elements, or one or more intervening layers or elements may also be present.

Also, when it is said that a certain element is "connected" or "coupled" to another element, this may mean that the elements are directly connected or coupled to each other, but it should be understood that another element may be "interposed" between the elements or the elements may be "connected" or "coupled" to each other via another element. Further, the term "electrically coupled" may mean not only "directly coupled" but also may include "coupled via other interposing element."

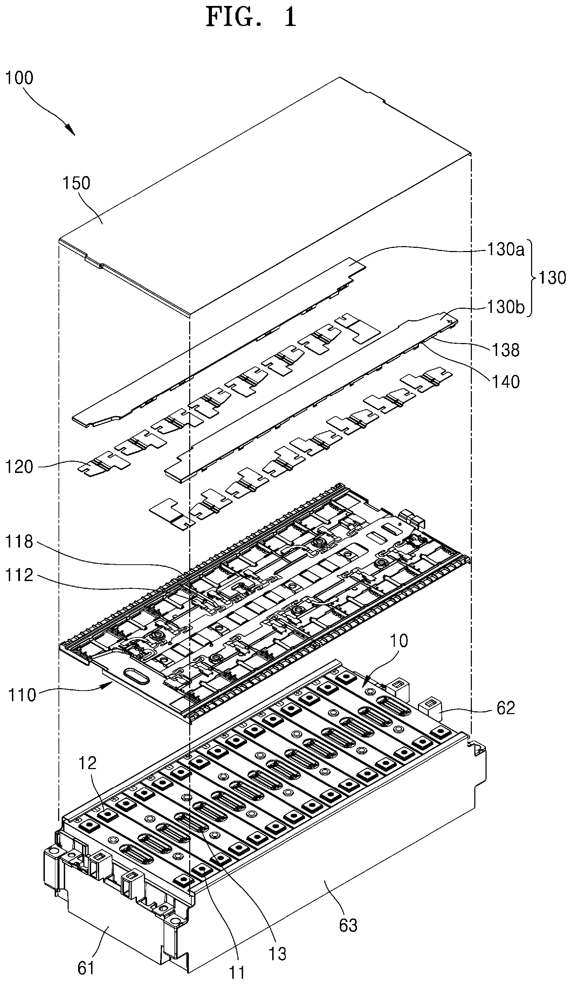

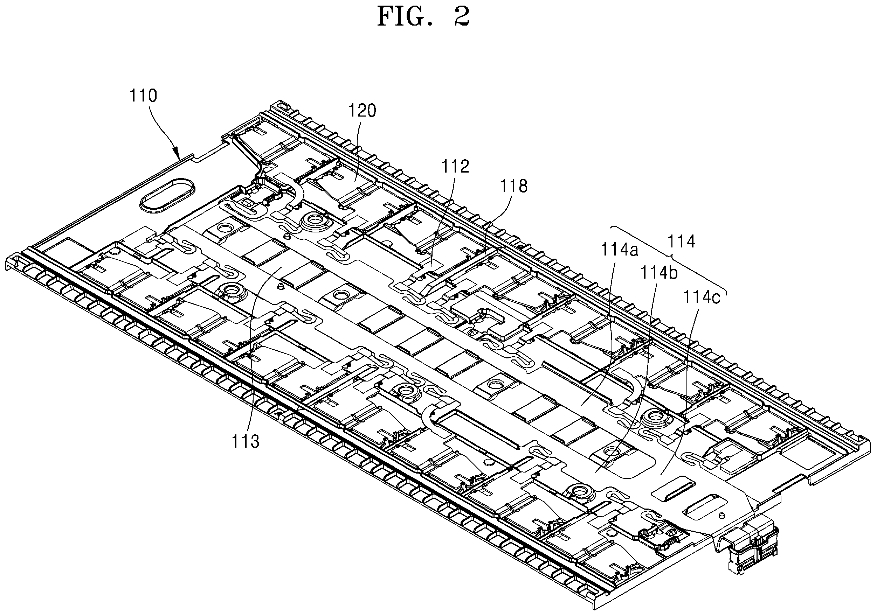

FIG. 1 is a schematic exploded perspective view illustrating an example of a battery module 100 according to an embodiment of the present disclosure. FIG. 2 is a schematic perspective view illustrating an example of a holder 110 and busbars 120 of the battery module 100 of FIG. 1.

Referring to FIGS. 1 and 2 together, the battery module 100 according to an embodiment of the present disclosure may include a plurality of battery cells 10 arranged in one direction (e.g., the plurality of battery cells 10 may be adjacent to each other in an arrangement direction), and the busbars 120 that each electrically connect one battery cell 10 to another battery cell 10 adjacent thereto. Each of the battery cells 10 may include a first terminal 11 electrically connected through the busbar 120 at one side, a second terminal 12, and a vent 13 for discharging gas generated internally.

The first terminal 11 may be any one of a positive electrode terminal and a negative electrode terminal. When the first terminal 11 is a positive electrode terminal, the second terminal 12 may be a negative electrode terminal, and conversely, when the first terminal 11 is a negative electrode terminal, the second terminal 12 may be a positive electrode terminal. That is, the first terminal 11 and the second terminal 12 are formed to have different electrical polarities and are not limited to a specific polarity.

The first terminal 11 of one battery cell 10 may be electrically connected to the second terminal 12 of another battery cell 10 adjacent thereto through the busbar 120, and the second terminal 12 of the one battery cell 10 may be electrically connected to the first terminal 11 of still another battery cell 10 adjacent thereto through another busbar 120. Meanwhile, although FIG. 1 illustrates a serial connection, various connection structures may be adopted as needed. In addition, the number and arrangement of the battery cells 10 may be changed as needed.

In an implementation, the plurality of arranged battery cells 10 may be accommodated in a housing. The housing may include a pair of end plates 61 and 62 facing wide surfaces of the battery cells 10, side plates 63 connected to the pair of end plates 61 and 62, and a bottom plate. The side plate 63 may support a side surface of the battery cell 10, and the bottom plate may support a bottom surface of the battery cell 10. In addition, the pair of end plates 61 and 62, the side plates 63, and the bottom plate 64 may be coupled to each other through members, e.g., bolts, but any method may be used as long as the method may enable fastening.

In an implementation, the battery module 100 may further include the holder 110 which is positioned on the plurality of battery cells 10 and accommodates the busbars 120, a cover portion 130 which is positioned on the holder 110 and covers the busbars 120, and an upper cover 150 coupled to the housing to accommodate the plurality of battery cells 10, the holder 110, and the cover portion 130.

The housing and the upper cover 150 may be coupled to each other through fastening members ,e.g., bolts, but any method may be used as long as the method may enable fastening. That is, the housing and the upper cover 150 may be coupled to each other to form an internal space (e.g., to form a volumetric container with an empty internal space), and the plurality of battery cells 10, the holder 110, and the cover portion 130 may be accommodated in the internal space.

Therefore, a material of the housing and the upper cover 150 may be a material that may protect the plurality of battery cells 10, the holder 110, and the cover portion 130 from mechanical shock or thermal shock. The material of the housing and the upper cover 150 may include, e.g., at least one selected from acrylonitrile butadiene styrene (ABS), polycarbonate (PC), polypropylene (PP), aluminum, and stainless steel.

In an implementation, the holder 110 may be positioned on the plurality of battery cells 10 and may accommodate the busbars 120. In addition, the holder 110 may include a sensing unit 114 that performs various protective functions to improve the stability and lifespan of the battery module 100. As an example, the sensing unit 114 may be connected to a battery management system (BMS).

The sensing unit 114 may include a first sensor 114a, a second sensor 114b, a metal layer, an electronic component, a protection circuit, and the like, and may be electrically connected to the busbars 120 through wires 112. One end portion of each of the wires 112 may be connected to a corresponding one of the busbars 120, and another end portion of each of the wires 112 may be connected to the sensing unit 114.

For example, the sensing unit 114 may include the first sensor 114a and the second sensor 114b which extend at different positions in a direction in which the plurality of battery cells 10 are arranged (e.g., longitudinal directions of the first and second sensors 114a and 114b may be parallel to an arrangement direction of the battery cells 10). In this case, the first sensor 114a and the second sensor 114b may be positioned parallel to each other to be spaced apart from each other by a certain interval, and may each include a metal layer at an edge close to the busbars 120. Accordingly, the first sensor 114a and the second sensor 114b may each be electrically connected to adjacent busbars 120 through the wires 112.

In this way, the first sensor 114a and the second sensor 114b may be disposed in the direction in which the plurality of battery cells 10 are arranged and in parallel to each other, while being spaced apart from each other, thereby minimizing an area of the protection circuit constituting the sensing unit 114. That is, as the sensing unit 114, the first sensor 114a and the second sensor 114b may be provided separately (e.g., as two separate narrow sensors spaced apart from each other rather than one wide sensor), thereby minimizing an unnecessary area of the protection circuit (e.g., so a combined area of the first and second sensors 114a and 114b may be smaller than a comparative single, wide sensor connected to the busbars 120).

The first sensor 114a and the second sensor 114b may be connected to each other through a connection member 114c. In this case, a first side of the connection member 114c may be connected to the first sensor 114a, and a second side of the connection member 114c may be connected to the second sensor 114b, so that an electrical connection may be made between the first sensor 114a and the second sensor 114b.

As an example, the connection between the connection member 114c and each of the first sensor 114a and the second sensor 114b may be made through any one of soldering, resistance welding, laser welding, and projection welding. As another example, the first sensor 114a, the second sensor 114b, and the connection member 114c may be manufactured integrally (e.g., formed in a same process as a monolithic and seamless structure) and may be made of the same material.

The sensing unit 114 may be made of a material having excellent electrical conductivity and elasticity or flexibility. In a case in which the sensing unit 114 is made of a material having elasticity or flexibility, when the battery cell 10 swells, shock may be absorbed due to the elasticity or flexibility of the sensing unit 114, thereby preventing the sensing unit 114 from being damaged. In addition, a material of the protection circuit included in the sensing unit 114 may be a material having elasticity or flexibility. For example, the protection circuit may be a flexible printed circuit (FPC).

In an implementation, a terminal for temperature measurement and/or a terminal for voltage measurement may be attached to each of the busbars 120, and measured information may be transmitted to the sensing unit 114 through the wire 112 and integrally managed. As an example, information such as a voltage, a current, and a temperature received by the first sensor 114a from the busbars 120 adjacent thereto, and information such as a voltage, a current, and a temperature received by the second sensor 114b from the busbars 120 adjacent thereto may be integrally managed by the sensing unit 114 through the connection member 114c.

In an implementation, each of the plurality of battery cells 10 may include the vent 13 that is a gas discharge passage formed at an upper portion thereof, and the holder 110 may further include holes 113 overlapping (e.g., exposing) the vents 13. Each of the hole 113 may be a discharge passage for high-temperature gas released when high-temperature gas is released through the vent 13 due to an increase in temperature of the battery cell 10.

In an implementation, the cover portion 130 may be positioned on the holder 110 and may be coupled to the holder 110 to cover the busbars 120. The cover portion 130 and the holder 110 may be coupled to each other, e.g., in a hook manner or any other suitable coupling manner. In addition, as shown in FIG. 1, the cover portion 130 may integrally cover the busbars 120 spaced apart from each other. When the battery module 100 includes the cover portion 130, the cover portion 130 may protect the busbars 120 from mechanical shock and may prevent the busbars 120 from being short-circuited, thereby improving the stability of the battery module 100.

For example, during thermal runaway of the battery module 100, foreign materials may be generated inside the battery module 100. As an example, the foreign materials may be fragments of the destroyed battery cell 10, and the fragments may be conductive materials included in the battery cell 10. In addition, the upper cover 150 may be destroyed during thermal runaway, and fragments of the upper cover 150 may also include conductive materials. During thermal runaway of the battery module 100, the cover portion 130 may cover the busbars 120 to prevent the busbars 120 from coming into contact with the fragments described above, thereby preventing the busbars 120 from being short-circuited to cause additional secondary thermal runaway.

In an implementation, the cover portion 130 may include a plurality of cover portions, e.g., first and second cover portions 130a and 130b, spaced apart from each other. The holes 113 of the holder 110 may be exposed between the plurality of cover portions 130 spaced apart from each other. When the plurality of cover portions 130 expose the holes 113, and high-temperature gas is released to the vent 13 due to an increase in temperature of the battery cell 10, a discharge passage for the high-temperature gas may be formed, thereby improving the stability of the battery module 100. In FIG. 1, the cover portion 130 is illustrated as including the first and second cover portions 130a and 130b, but the number of cover portions 130 may be changed as needed.

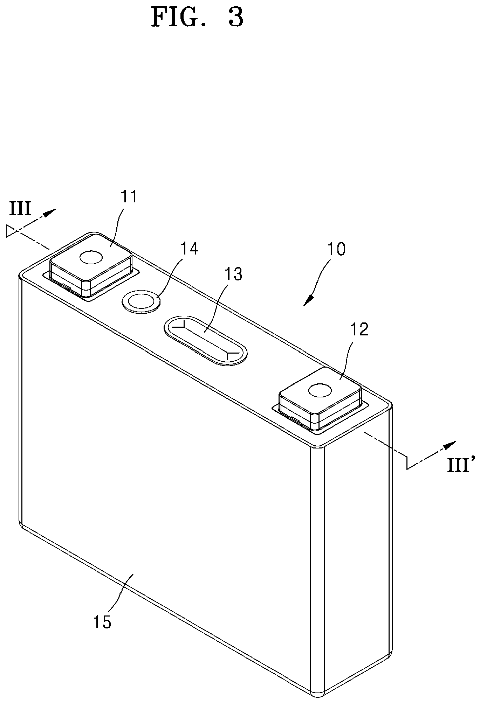

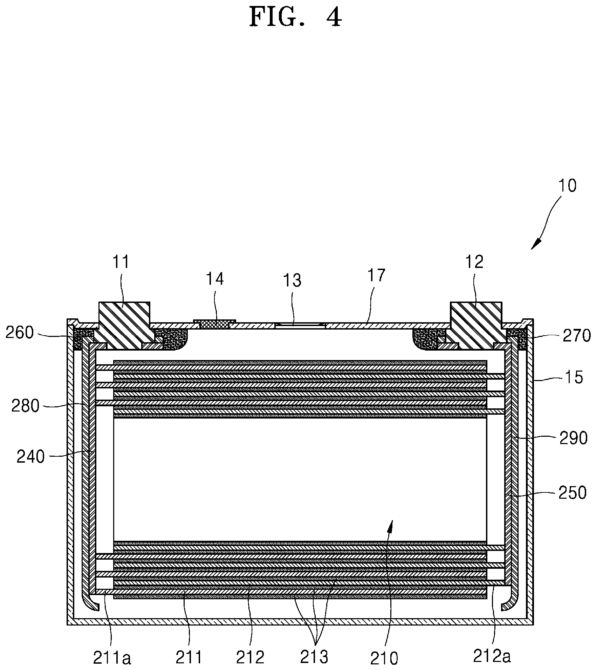

FIG. 3 is a schematic perspective view illustrating an example of the battery cell 10 of the battery module 100 of FIG. 1. FIG. 4 is a schematic cross-sectional view illustrating an example of a cross section along line III-III' of FIG. 3.

Referring to FIGS. 3 and 4 together, the battery cell 10 according to the present embodiment may include at least one electrode assembly 210 in which a separator 213, which is an insulator, is interposed between a positive electrode 211 and a negative electrode 212 and then wound, and a case 15 in which the electrode assembly 210 is embedded (e.g., accommodated). An example in which the battery cell 10 according to the present embodiment is a prismatic lithium ion battery cell will be described. However, various types of battery cells, e.g., lithium polymer battery cells or cylindrical battery cells, may be implemented.

The positive electrode 211 and the negative electrode 212 may include coated portions which are areas in which an active material is applied onto a current collector made of thin metal foil, and uncoated portions 211a and 212a which are areas which are not coated with an active material. For example, the positive electrode 211 and the negative electrode 212 may be wound after the separator 213, which is the insulator, is interposed therebetween. In another example, the electrode assembly 210 may have a structure in which a positive electrode and a negative electrode, each including a plurality of sheets, are alternately stacked with a separator interposed therebetween.

The case 15 may form the overall exterior of the battery cell 10 and may be made of a conductive metal such as aluminum, an aluminum alloy, or nickel-plated steel. In addition, the case 15 may provide a space in which the electrode assembly 210 is accommodated.

The battery cell 10 may include a cap plate 17 that covers an opening of the case 15, and the case 15 and the cap plate 17 may be made of a conductive material. Here, the first terminal 11 and the second terminal 12 electrically connected to the positive electrode 211 and the negative electrode 212 may be installed to pass through the cap plate 17 and protrude to the outside.

For example, outer peripheral surfaces of upper pillars of the first terminal 11 and the second terminal 12, which protrude outward from the cap plate 17, may be threaded and fixed to the cap plate 17 through nuts. In another example, the first terminal 11 and the second terminal 12 may have a rivet structure to be riveted or may be welded and coupled to the cap plate 17.

In addition, the cap plate 17 may be made of a thin plate and may be coupled to the opening of the case 15. An electrolyte injection port 14, on which a sealing stopper may be installed, may be formed in the cap plate 17, and the vent 13, in which a notch is formed, may be installed.

The first terminal 11 and the second terminal 12 may be electrically connected to current collectors including first and second current collectors 240 and 250 (hereinafter referred to as positive and negative electrode current collectors) joined to a positive electrode uncoated portion 211a and a negative electrode uncoated portion 212a through welding. For example, the first terminal 11 and the second terminal 12 may be coupled to the positive and negative electrode current collectors 240 and 250 through welding. In another example, the first terminal 11 and the second terminal 12 and the positive and negative electrode current collectors 240 and 250 may be formed by being integrally coupled to each other.

In addition, an insulating member may be installed between the electrode assembly 210 and the cap plate 17. Here, the insulating member may include first and second lower insulating members 260 and 270, and each of the first and second lower insulating members 260 and 270 may be installed between the electrode assembly 210 and the cap plate 17.

In addition, according to the present embodiment, one end portion of a separation member that may be installed to face one side surface of the electrode assembly 210 may be installed between the insulating member and each of the first terminal 11 and the second terminal 12.

Here, the separation member may include first and second separation members 280 and 290. Accordingly, one end portions of the first and second separation members 280 and 290 that may be installed to face one side surface of the electrode assembly 210 may be installed between the first and second lower insulating members 260 and 270 and the first and second terminals 11 and 12. As a result, the first terminal 11 and the second terminal 22 welded and coupled to the positive electrode current collector 240 and the negative electrode current collector 250, respectively, may be coupled to the first and second lower insulating members 260 and 270 and ends of the first and second separation members 280 and 290.

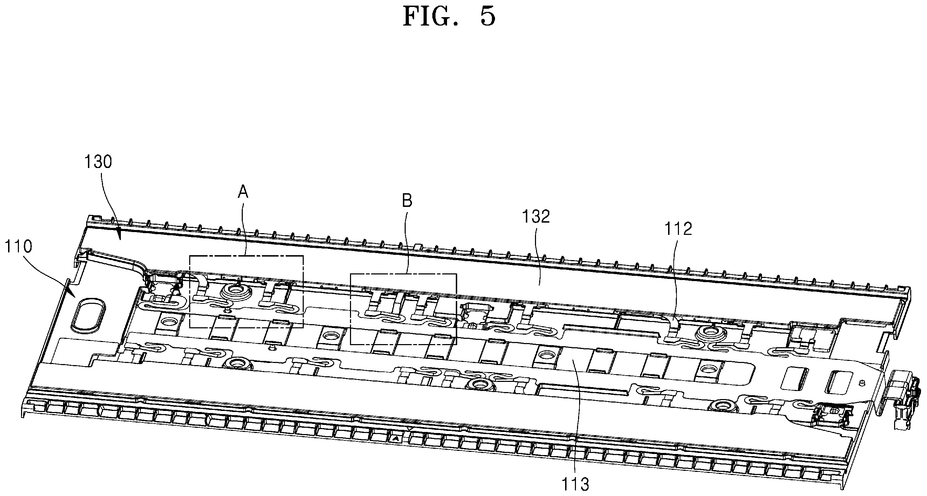

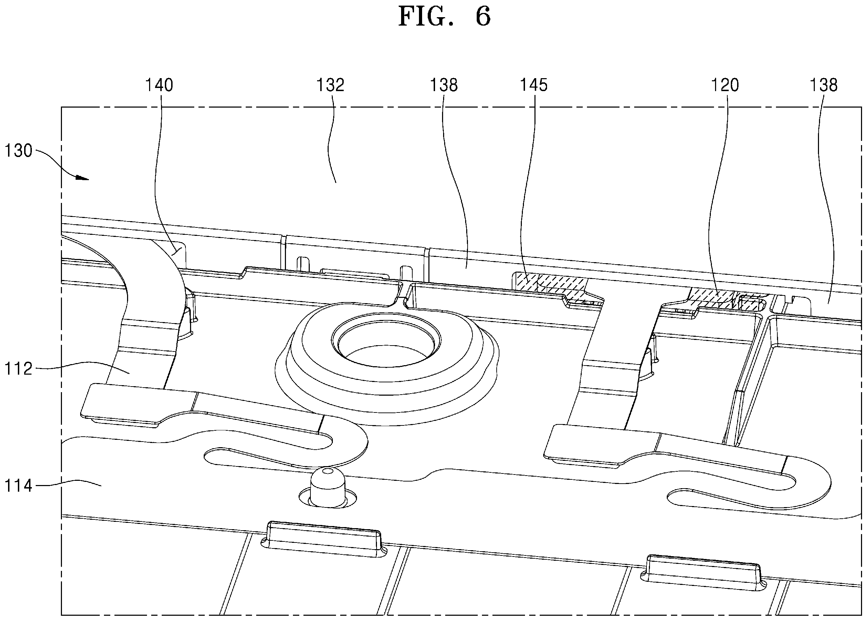

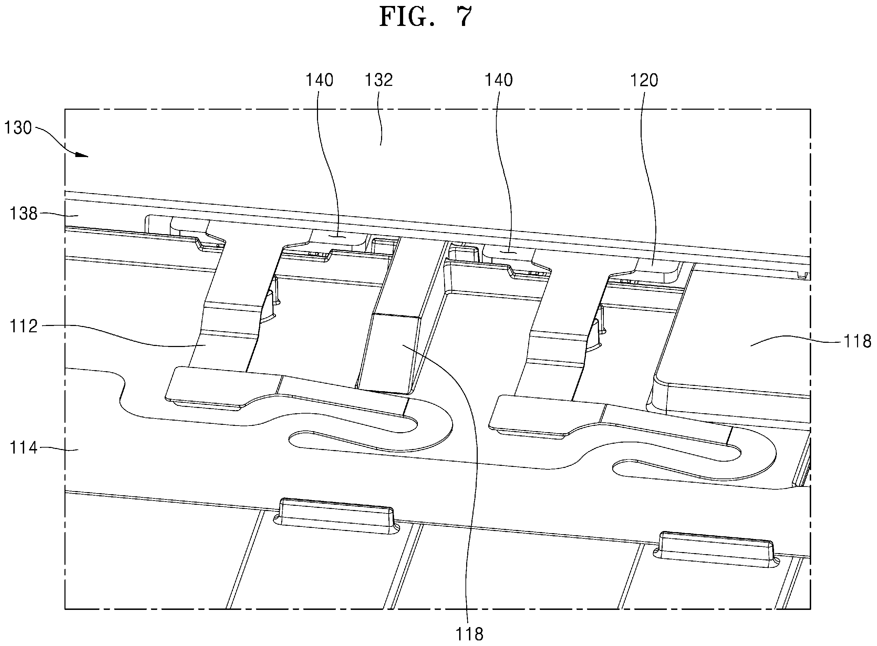

FIG. 5 is a schematic perspective view illustrating an example of a state in which the holder 110, the busbar 120, and the cover portion 130 of the battery module 100 of FIG. 1 are coupled to each other. FIG. 6 is an enlarged perspective view of part A of FIG. 5, and FIG. 7 is an enlarged perspective view of part B of FIG. 5.

Referring to FIGS. 5 to 7 together, the cover portion 130 may include a cover 132 covering an upper surface of the busbar 120 and wall portions 138 protruding from edges of the cover 132 toward the busbars 120. In addition, the holder 110 may include protrusions 118 protruding toward the cover 132.

When thermal runaway occurs in the battery module 100, foreign materials may be generated inside the battery module 100. For example, the foreign materials may be fragments of the destroyed battery cell 10, and the fragments may be conductive materials included in the battery cell 10. In addition, the upper cover 150 may be destroyed during thermal runaway, and fragments of the upper cover 150 may also include conductive materials. When the battery module 100 includes the cover portion 130, the fragments and the busbars 120 may be prevented from coming into contact with each other, thereby preventing a potential short circuit.

In an implementation, the cover portion 130 may be coupled to the holder 110. A plurality of openings 140 may be defined by a combination of the wall portions 138 of the cover portion 130 and the protrusions 118 of the holder 110. As an example, as shown in FIGS. 6 and 7, a space between the wall portion 138 and the wall portion 138 may be defined as the opening 140, e.g., the opening 140 may be an opening or a gap between two adjacent wall portions 138. In another example, as shown in FIG. 7, a space between the wall portion 138 and the protrusion 118 may be defined as the opening 140. In still another example, a space between the protrusion 118 and the protrusion 118 may be defined as the opening 140. For example, referring to FIGS. 6-7, the openings 140 may overlap (e.g., laterally expose) the busbars 120. The opening 140 may be a passage through which a first end portion of the wire 112 may be connected to the busbar 120 (which is covered by the cover portion 130) and a second end portion of the wire 112 may extend through the opening 140 to be connected to the sensing unit 114.

**In** addition, the opening 140 may be separated from another opening 140 adjacent thereto by the wall portion 138 or the protrusion 118. When the openings 140 are spaced apart from each other, the wires 112 respectively passing through the openings 140 may also be spaced apart from each other. That is, one wire 112 of the wires 112 may pass through one opening 140 of the plurality of openings 140, e.g., the wires 112 may be arranged in a one-to-one correspondence with respect to the openings 140.

Accordingly, even if thermal runaway occurs in the battery module 100 and the above-described fragments having conductivity are generated, if the fragments come into contact with the wires 112, since the wires 112 are disposed separately and spaced apart from each other, the wires 112 may be prevented from being short-circuited with each other, thereby improving the stability of the battery module 100. Likewise, even when conductive fragments enter the cover portion 130 through the opening 140 and come into contact with the busbars 120, since the busbars 120 may be spaced apart from each other, a short circuit may be prevented from occurring.

In an implementation, the cover portion 130 protects the busbars 120 from conductive fragments and requires excellent electrical insulating properties and durability. Accordingly, a material of the cover portion 130 may include at least one selected from polyvinyl chloride, polycarbonate, polyamide, silicone, an epoxy resin, polyurethane, polyethylene, polypropylene, polyvinylidene fluoride, polyimide, and Teflon.

However, even when the electrical insulating properties of the cover portion 130 are excellent, when used for a long period of time, the cover portion 130 may be deteriorated, may absorb moisture, or may be contaminated, which may form a path through which a current may flow. In such a case, in order to prevent the cover portion 130 from contacting the busbars 120 (which could potentially cause a short circuit and a fire), the cover portion 130 may be provided to be spaced apart from the busbars 120.

In detail, when a distance difference in a height direction between the busbar 120 and the cover 132 covering the busbar 120 on the busbar 120 is defined as a separation distance, the separation distance between an upper surface of the busbar 120 and a lower surface of the cover 132 may be in a range of 0.1 mm to 5 mm. When the separation distance between the upper surface of the busbar 120 and the lower surface of the cover 132 is less than 0.1 mm, a path through which a current may flow may be generated in the cover 132 due to deterioration, moisture absorption, or contamination of the cover 132. When mechanical shock or the like is applied to the battery module 100, the separation distance between the upper surface of the busbar 120 and the lower surface of the cover 132 may be short, and thus the busbar 120 and the cover 132 may come into contact with each other, resulting in a short circuit. In addition, when the separation distance between the upper surface of the busbar 120 and the lower surface of the cover 132 exceeds 5 mm, the integration density of the battery module 100 may decrease.

In an implementation, referring to FIG. 6, since the busbar 120 and the cover 132 are spaced apart from each other, an air layer 145 including air may be formed in a space between the busbar 120 and the cover 132. Since air has low thermal conductivity and low electrical conductivity, the air layer 145 may have an excellent thermal insulation effect and electrical insulating effect. For example, the thermal conductivity of air at room temperature is 0.024 W/(m K), and the electrical conductivity of air is 10⁻¹⁴ S/m. Therefore, when the battery module 100 includes the air layer 145, it is possible to reduce a degree by which heat generated from one busbar 120 when a temperature of the battery module 100 increases is transferred to the adjacent busbar 120 adjacent thereto to generate additional heat. In addition, as described above, the cover portion 130 may be deteriorated, may absorb moisture, or may be contaminated to generate a path through which a current may flow. However, the air layer 145 may be an excellent electrical insulating layer and thus may prevent a current of the busbar 120 from flowing to the cover portion 130.

In an implementation, a thickness of the cover portion 130 (e.g., a thickness of the cover 132 in a direction oriented from the busbars 120 toward the upper cover 150) may be in a range of 0.6 mm to 3 mm. When the thickness of the cover portion 130 is less than 0.6 mm, the cover portion 130 may be vulnerable to mechanical shock or thermal shock, and as a result, the cover portion 130 may be damaged by the mechanical shock or thermal shock. In addition, when the thickness of the cover portion 130 exceeds 3 mm, the manufacturing costs of the cover portion 130 may increase, and the integration density of the battery module 100 may decrease.

By way of summation and review, embodiments of the present disclosure provide a battery module with improved stability. That is, according to embodiments of the present disclosure, since a battery module includes a cover portion that covers a busbar, the busbar may be prevented from coming into contact with foreign materials generated inside the battery module due to thermal runaway or the like or fragments generated when an upper cover is destroyed due to thermal runaway or the like, thereby preventing a short circuit to improve the stability of the battery module.

However, the effects that can be achieved through the present disclosure are not limited to the above-described effects, and other technical effects that are not described herein will be clearly understood by those skilled in the art from the following disclosure.

When terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

## Claims

1. A battery module (100), comprising:
a plurality of battery cells (10), each of the plurality of battery cells including a vent (13);
busbars (120) electrically connecting the plurality of battery cells;
a holder (110) on the plurality of battery cells and accommodating the busbars, the holder including holes (113) and protrusions (118), and each of the holes overlapping a corresponding vent; and
a cover portion (130) on the holder and covering the busbars, the cover portion including:
a cover (132) on upper surfaces of the busbars, the protrusions (118) of the holder protruding toward the cover, and
wall portions (138) protruding from edges of the cover toward the busbars.

2. The battery module as claimed in claim 1, wherein the upper surfaces of the busbars (120) are spaced apart from the cover (132).

3. The battery module as claimed in claim 2, wherein a separation distance between the upper surfaces of the busbars (120) and a lower surface of the cover (132) is in a range of 0.1 mm to 5 mm.

4. The battery module as claimed in any one of claims 1 to 3, further comprising an air layer between the upper surfaces of the busbars (120) and the cover (132).

5. The battery module as claimed in any one of claims 1 to 4, wherein a thickness of the cover portion (130) is in a range of 0.6 mm to 3 mm.

6. The battery module as claimed in any one of claims 1 to 5, wherein:
the cover portion (130) is coupled to the holder (110), and
the wall portions (138) of the cover portion and the protrusions (118) of the holder define a plurality of openings (140), wires (112) extending through the plurality of openings.

7. The battery module as claimed in claim 6, wherein each of the plurality of openings (140) is between adjacent ones of the wall portions (138), between one of the wall portions (138) and one of the protrusions (118), or between adjacent ones of the protrusions (118).

8. The battery module as claimed in claim 6 or claim 7, wherein each of the wires (112) is connected to a respective one of the busbars (120), each of the wires passing through a corresponding one of the plurality of openings (140).

9. The battery module as claimed in any one of claims 6 to 8, wherein the plurality of openings (140) overlap the busbars (120), respectively.

10. The battery module as claimed in any one of claims 1 to 9, wherein the cover portion (130) includes a plurality of cover portions (130a, 130b) spaced apart from each other, the holes (113) of the holder (110) being exposed in a space between the plurality of cover portions (130a, 130b).

11. The battery module as claimed in any one of claims 6 to 9, further comprising:
a sensing unit (114) on the holder (110); and
wherein the wires (112) extend through the plurality of openings in a one-to-one correspondence, a first end of each of the wires being connected to a corresponding one of the busbars (120), and a second end of each of the wires being connected to the sensing unit (114).
